(19) Europäisches Patentamt / European Patent Office / Office européen des brevets

(11) **EP 2 142 473 B1**

(12) **EUROPEAN PATENT SPECIFICATION**

(45) Date of publication and mention
of the grant of the patent:
**02.04.2014 Bulletin 2014/14**

(21) Application number: **08734239.0**

(22) Date of filing: **05.05.2008**

(51) Int Cl.:
*C01B 25/45* (2006.01)    *H01M 4/58* (2010.01)
*H01M 4/04* (2006.01)    *H01M 4/48* (2010.01)
*H01M 10/052* (2010.01)

(86) International application number:
**PCT/CN2008/070883**

(87) International publication number:
**WO 2009/015565 (05.02.2009 Gazette 2009/06)**

(54) **METHOD FOR PREPARING LITHIUM IRON PHOSPHATE AS POSITIVE ELECTRODE ACTIVE MATERIAL FOR LITHIUM ION SECONDARY BATTERY**

VERFAHREN ZUR HERSTELLUNG VON LITHIUMEISENPHOSPHAT ALS AKTIVMASSE FÜR POSITIVE ELEKTRODEN FÜR LITHIUM-IONEN-AKKUMULATOR

PROCÉDÉ D'ÉLABORATION DE PHOSPHATE DE FER-LITHIUM COMME MATÉRIAU ACTIF D'ÉLECTRODE POSITIVE POUR BATTERIE SECONDAIRE AUX IONS LITHIUM

(84) Designated Contracting States:
**AT BE BG CH CY CZ DE DK EE ES FI FR GB GR HR HU IE IS IT LI LT LU LV MC MT NL NO PL PT RO SE SI SK TR**

(30) Priority: **31.07.2007   CN 200710143408**
**11.10.2007   CN 200710152572**

(43) Date of publication of application:
**13.01.2010   Bulletin 2010/02**

(73) Proprietor: **Byd Company Limited**
**Shenzhen Guangdong 518118 (CN)**

(72) Inventors:
• **XU, Zhongzhu**
**Shenzhen, Guangdong 518118 (CN)**
• **RONG, Qiang**
**Shenzhen, Guangdong 518118 (CN)**
• **XI, Xiaobing**
**Shenzhen, Guangdong 518118 (CN)**
• **LIAO, Huadong**
**Shenzhen, Guangdong 518118 (CN)**
• **WEI, Jianqun**
**Shenzhen, Guangdong 518118 (CN)**

(74) Representative: **HOFFMANN EITLE**
**Patent- und Rechtsanwälte**
**Arabellastrasse 4**
**81925 München (DE)**

(56) References cited:
**EP-A1- 1 682 446       WO-A1-02/30815**
**CN-A- 1 958 441       DE-A1-102005 012 640**
**JP-A- 2000 294 238       JP-A- 2004 079 276**
**US-A1- 2006 172 195**

**Description**

Technical Field

The present invention relates to a method for preparing a battery positive electrode active material, more particularly to a method for preparing lithium iron phosphate ($LiFePO_4$) as positive electrode active material for a lithium ion secondary battery.

Technical Background

The olivine-type $LiFePO_4$, with excellent electrochemical properties, is suitably used as positive electrode material for lithium battery. $LiFePO_4$ is applicable to the field of various mobile power sources, and particularly has extremely promising market potential in the field of battery for electric vehicle due to its advantages of excellent cycle performance, good high-temperature charge-discharge performance, abundant raw material resources, no environmental pollution, good thermal stability, and good safety of the prepared battery. But as pure $LiFePO_4$ has low ion conductivity and electron conductivity, and lithium ions have low diffusion coefficient between phases of $LiFePO_4$ and $FePO_4$ during charging and discharging, it is difficult to commercialize $LiFePO_4$, which dramatically restricts application of lithium iron phosphate in commercial lithium ion battery. Presently, the problem of poor conductivity of $LiFePO_4$ has been substantially solved by coating $LiFePO_4$ with carbon or doping carbon into $LiFePO_4$ to obtain $LiFePO_4$/C composite by carbothermal reaction.

CN 1785799A discloses a solid-phase synthesis method for preparing lithium iron phosphate which adopts ferrous salt as iron source, such as ferrous oxalate, ferrous acetate, and ferrous chloride, and adopts ammonium dihydrogen phosphate, diammonium hydrogen phosphate, or ammonium phosphate as phosphorus source. The method comprises weighing and mixing the lithium salt, aforementioned ferrous salt and phosphate salt, and transition element dopant at Li: Fe: P: TR atomic ratio of (1-x): 1: 1: x, adding milling medium, ball milling for 6-12 hr, baking at 40-70°C, heating the dried powder at 400-550°C in inert atmosphere or reducing atmosphere, holding for 5-10 hr for precalcining, second ball milling for 6-12 hr, baking at 40-70°C, and second calcining at 550-850°C in inert atmosphere or reducing atmosphere to give transition element-doped lithium iron phosphate powder.

CN 1948133A discloses a preparation method of lithium iron phosphate, comprising mixing lithium dihydrogen phosphate containing doping element, ferrous oxalate or ferrous acetate, and conductive agent or precursor thereof at certain ratio, placing the mixture in microwave oven under inert atmosphere protection, calcining at 400°C-900°C for 10-60 min, and cooling to room temperature to give lithium iron phosphate.

In the prior art for preparing lithium iron phosphate from ferrous salt, inert gas needs to be continuously introduced during reaction in order to prevent the ferrous salt from being oxidized, which not only consumes large amount of inert gas, but also readily makes the prepared lithium iron phosphate incorporate $Fe_2P$ impurity phase, thus leading to high internal resistance and low specific capacity of the battery prepared therefrom.

DE 10 2005 012640 A1 relates to a method for preparing lithium metal phosphates of the formula LiMPO4, where M is at least one divalent metal, preferably of the first row transition metals group. In a first step of the method, a lithium phosphate is reacted with a metal salt and an acid phosphate source in a polar solvent to yield a M-containing phosphate. Subsequently, a precursor mixture for the desired lithium-metal-phosphate is obtained through the addition of a basic lithium source, and the precursor is then preferably converted to the desired final product under hydrothermal conditions and separated to yield a lithium-containing filtrate. Lithium ions are precipitated as lithium phosphate through the addition of a basic phosphate source.

**Summary of the Invention**

The object of the present invention is to overcome the disadvantages of the lithium iron phosphate prepared by the available methods, such as high internal resistance, and low specific capacity of the battery prepared therefrom, and to provide a method for preparing lithium iron phosphate capable of imparting the prepared battery with low internal resistance and high specific capacity.

The present invention provide a method for preparing lithium iron phosphate as positive electrode active material for lithium ion secondary battery, which comprises sintering a mixture containing a lithium source, an bivalent iron source, a phosphorus source, and a carbon source in an inert atmosphere, and cooling the sintered product; wherein during the sintering process, the inert atmosphere is static, and has a normal pressure.

In the method provided in the present invention for preparing lithium iron phosphate, during sintering process, the inert atmosphere is a static atmosphere, and the pressure of the inert atmosphere is normal pressure, i.e. the inert gas is not introduced during the sintering process, and only the inert gas introduced before the sintering and the non-oxidative gas generated from decomposition of the raw material during the sintering are used as protective gas for

protecting $Fe^{2+}$ from being oxidized into $Fe^{3+}$. The lithium iron phosphate prepared by the method provided in the present invention is free of Fe2P impurity phase, with which the prepared battery has high capacity, low internal resistance, and good cycle performance. For example, the battery prepared from lithium iron phosphate obtained by the method in example 1 has initial discharge specific capacity up to 150mAh/g, and low internal resistance of 25-30mΩ; while the battery prepared from lithium iron phosphate obtained by the method in comparative example I only has initial discharge specific capacity of 112mAh/g and its internal resistance comes up to 200-300 mΩ.

**Brief Description of Accompanying Drawings**

Fig. 1 is XRD diffraction pattern of the lithium iron phosphate prepared by the example **1** of the present invention;
Fig. 2 is XRD diffraction pattern of the lithium iron phosphate prepared by the example 2 of the present invention;
Fig. 3 is XRD diffraction pattern of the lithium iron phosphate prepared by the comparative example 1 of conventional methods;
Fig. 4 is XRD diffraction pattern of the lithium iron phosphate prepared by the comparative example 2 of conventional methods;
Fig. 5 is XRD diffraction pattern of the lithium iron phosphate prepared by the example 5 of the present invention.

Preferred Embodiments For Carrying Out the Present Invention

The method provided in the present invention comprises sintering a mixture containing a lithium source, an bivalent iron source, a phosphorus source, and a carbon source in an inert atmosphere, and cooling the sintered product; wherein during the sintering process, the inert atmosphere is static, and has a normal pressure. The normal pressure in the present invention refers to one standard atmosphere, i.e. $1.01 \times 10^5$ Pa. Although geological position, height above sea-level, and temperature may vary at each place, and the real local atmosphere pressure is not identical to the standard atmosphere, the normal pressure in the present invention refers to one standard atmosphere for the purpose of simplicity.
The static inert atmosphere in the present invention refers to non-flowed atmosphere, which is compared with continuous introduction of inert gas during the sintering process in the prior art, i.e., introduction of inert gas is stopped during sintering process, and only the inert gas introduced before the sintering and the non-oxidative gas generated from decomposition of the raw material in the sintering process are used as protective gas for protecting $Fe^{2+}$ from being oxidized into $Fe^{3+}$.
According to the present invention, the sintering process can be carried out in various reaction apparatus, as long as it is ensured that the inert atmosphere is static inert atmosphere and the pressure of the inert atmosphere is normal pressure during sintering process. For example, according to one preferred embodiment in the present invention, the sintering is carried out in a reactor provided with a gas inlet, a gas outlet and a pipe, wherein the inert gas is introduced into the reactor through the gas inlet before sintering to replace the air in the reactor, the gas inlet is kept closed during sintering, and one end of the pipe is hermetically connected with the gas outlet and the other end is disposed in a hydraulic liquid for ensuring that the gas generated during the sintering process is discharged after passing through the hydraulic liquid so as to satisfy that the inert atmosphere is static inert atmosphere during sintering process while the inert atmosphere pressure is normal pressure.
According to the present invention, the purpose of communicating the gas outlet and the hydraulic liquid via the pipe during sintering process is to prevent air from entering into the reactor and oxidizing lithium iron phosphate and to maintain the normal pressure in the reactor; therefore, in preferred embodiment, the manner for communicating the gas outlet and the hydraulic liquid via the pipe is to place the other end of the pipe in the hydraulic liquid, preferably 5-8 cm below the liquid level of the hydraulic liquid.
There is no special restriction on quantity and position of the gas outlets and gas inlets arranged on the reactor, as long as it can be ensured that the inert gas can be introduced into the reactor to replace the air in the reactor, and gas resulted from reaction is discharged via gas outlet to keep the normal pressure of the inert atmosphere. Preferably, for conveniently replacing air and discharging the gas generated during the sintering process, the gas outlets and gas inlets are disposed at the same side of the reactor, and more preferably at the same vertical plane of the same side, wherein the gas inlet is arranged at lower part and the gas outlet is arranged at upper part. When the inert gas is introduced into the reactor, there is no special restriction on its flow rate, for example 5-20 L/min.
There is no special limitation on volume and material of the reactor. Those skilled in the art can determine material and volume of the reactor according to production requirement.
As the mixture containing the lithium source, bivalent iron source, phosphorus source, and carbon source will generate hydrogen, ammonia gas, carbon monoxide, and carbon dioxide during sintering in the inert atmosphere and the sintering temperature is relatively high, the hydraulic liquid is preferably liquid which has a boiling point no lower than 140 °C and is unreactive with gases generated during the sintering process in order to prevent backward suction of the hydraulic liquid, such as one of hydraulic oil, quenching oil, and high temperature lubrication oil.

According to the present invention, the inert atmosphere is one or more gases unreactive with reactants or reaction product, such as one or more of nitrogen, carbon monoxide, carbon dioxide, ammonia gas, and Group 0 gases. The lithium source, bivalent iron source, and phosphorus source have Li: Fe: P molar ratio of 0.9-1.2: 1: 1, preferably the Li: Fe: P stoichiometric ratio in the product lithium iron phosphate, i.e. Li: Fe: P molar ratio of 1:1:1.

The lithium compound can be selected from well known lithium compounds for preparing lithium iron phosphate, such as one or more of $Li_2CO_3$, $LiOH$, $Li_2C_2O_4$ and $CH_3COOLi$.

The phosphorus source can be selected from well known phosphorus compounds for preparing lithium iron phosphate, such as one or more of $NH_4H_2PO_4$, $(NH_4)_2HPO_4$, $(NH_4)_3PO_4$, $LiH_2PO_4$, $Li_2HPO_4$ and $Li_3PO_4$.

The carbon source can be additive with conductive effect well known in the field, such as one or more of terpolymer of benzene, naphthalene and phenanthrene, binary copolymer of benzene and phenanthrene, binary copolymer of benzene and anthracene, polyvinyl alcohol, sucrose, glucose, citric acid, starch, dextrin, phenolic resin, furfural resin, artificial graphite, natural graphite, acetylene black, carbon black, and mesocarbon microbeads, and preferably one or more of sucrose, glucose, starch, dextrin, artificial graphite, natural graphite, acetylene black, carbon black, and mesocarbon microbeads. During the sintering process, the carbon source can partially be decomposed and released in form of carbon monoxide and carbon dioxide, and partially be doped into the generated lithium iron phosphate to improve conductivity of the lithium iron phosphate. The amount of carbon source can be 0.5-20wt%, preferably 3-12 wt% relative to the total weight of the lithium source, bivalent iron source, and phosphorus source.

The bivalent iron source can be selected from well known ferrous compounds for preparing lithium iron phosphate, such as one or more of $FeC_2O_4$, $Fe(CH_3COO)_2$ and $FeCO_3$. The iron source is preferably mixture of $FeC_2O_4$ and $FeCO_3$, and the molar ratio of $FeC_2O_4$ to $FeCO_3$ can be 1: 0.5-4, preferably 1: 1.5-4.

Compared with ferrous oxalate as sole iron source, the mixture of $FeC_2O_4$ and $FeCO_3$ at molar ratio of 1:0.5-4 as iron source has the advantage as below: the amount of the generated CO is small during sintering of the mixture, and thus the generated CO only prevents $Fe^{2+}$ from being oxidized into $Fe^{3+}$, and will not reduce $Fe^{2+}$ into Fe or $PO_4^{3-}$ into P, such that generation of $Fe_2P$ is prevented, and the obtained lithium iron phosphate has high purity and further improved specific capacity; meanwhile, since no $H_2O$ or Fe is generated, no hydrogen will be generated and the operation safety will be improved.

The mixture of $FeC_2O_4$ and $FeCO_3$ is prepared by one of the following methods:

Method 1: mixing anhydrous ferrous oxalate and anhydrous ferrous carbonate at molar ratio of 1: 0.5-4;
Method 2: heating ferrous oxalate under vacuum at a temperature of 100-350°C, preferably 120-300°C for 0.2-6 hr, and preferably 0.5-5 hr.

Molar ratio of $FeC_2O_4$ to $FeCO_3$ in the product resulted from heating ferrous oxalate can be calculated according to method as below.

Provided that $FeC_2O_4 \cdot 2H_2O$ is added at the mass of X g, and the mass of the mixture of $FeC_2O_4$ and $FeCO_3$ as the product resulted from heating $FeC_2O_4 \cdot 2H_2O$ is Y g, the molar ratio of $FeC_2O_4 : FeCO_3$ is (179.902Y-115.86X): (143.87X-179.902Y), wherein 179.902 is the molecular weight of $FeC_2O_4 \cdot 2H_2O$, 115.86 is the molecular weight of $FeCO_3$, and 143.87 is the molecular weight of $FeC_2O_4$.

The heating of ferrous oxalate is carried out under vacuum condition, such that CO generated from decomposition can be removed in time to avoid $Fe^{2+}$ from being reduced into Fe by CO. The pressure under vacuum condition may be 100-1,000 Pa, preferably 200-700 Pa. Herein the pressure is absolute pressure. Conventional vacuum apparatus, such as vacuum pump or vacuum oven, can be used to realize the aforementioned vacuum condition.

The mixture containing the lithium source, bivalent iron source, phosphorus source, and carbon source can be obtained by mechanical mixing or grinding, preferably ball milling. The ball milling method comprises mixing the lithium source, bivalent iron source, phosphorus source, and carbon source with the dispersant, and then ball milling. The dispersant can be conventional organic solvents, such as one or more of methanol, ethanol, and acetone. The weight ratio of the usage amount of the dispersant to the total weight of iron source, lithium source, phosphorus source, and carbon source is 1-5: 1. The ball milling condition is such to ensure that the aforementioned substances can be uniformly mixed, for example, the ball milling time can be 3-12 hr. Preferably, the mixture is further dried after the ball milling process. The drying method and condition are well known for those skilled in the art. The drying condition is such to ensure the dispersant can be evaporated off, for example, the drying temperature can be 30-80 °C.

The sintering method can be various sintering methods well known to those skilled in the art, for example one-stage sintering or two-stage sintering.

The one-time sintering is preferably one-stage constant-temperature sintering, which can be carried out at 500-750°C, preferably 700-750°C, for 2-20 hr, preferably 10-20 hr. For further controlling morphology of lithium iron phosphate to ensure integral growth of lithium iron phosphate crystal form, preferably, the one-stage constant-temperature sintering method in the present invention comprises heating at rate of 5-20°C/min, preferably 10-15°C/min, to the temperature for the constant-temperature sintering, and sintering at that temperature.

The two-stage sintering method comprises subjecting the mixture to a first sintering at a first sintering temperature of 300-450°C for 4-15 hr, and a second sintering at a second sintering temperature of 600-800 °C for 10-25 hr.

The cooling method can be various methods well known in the field, such as natural cooling. For further preventing oxidation of the generated lithium iron phosphate, the sintering product is preferably cooled to room temperature under inert atmosphere. The inert atmosphere can be static atmosphere, and is preferably flow atmosphere with gas flow rate of 2-20 L/min.

The present invention will be further described by the examples as below.

Example 1

This example describes the method for preparing lithium iron phosphate provided in the present invention.

(1) 369g of $Li_2CO_3$, 1799g of $FeC_2O_4 \cdot 2H_2O$, 1150g off $NH_4H_2PO_4$, 300g of glucose and 3000g of ethanol were mixed (the molar ratio of Li:Fe:P is 1:1:1), ball milled at 300 rpm for 10 hr, and then taken out, and dried at 80 °C .

(2) 300g of the mixture obtained in step (1) was fed into a stainless reactor (100L) provided with a gas inlet and a gas outlet, wherein the gas inlet and the gas outlet were arranged in the same vertical plane, the gas inlet was arranged at lower part, and the gas outlet was arranged at upper part. The gas inlet and gas outlet were opened, while argon gas was introduced at flow rate of 5 L/min to replace the air in the reactor. Thereafter, the gas inlet was closed, and the gas outlet was connected with a guide tube which was placed into 25 °C hydraulic oil (Caltex, special hydraulic oil 46#) at depth of 5cm below the oil level. Then the mixture was heated at rate of 10°C/min to 750°C, and sintered at that temperature for 20 hr. Finally, the gas inlet was opened, and argon gas was introduced at the rate of 5 L/min for cooling the product to room temperature to obtain lithium iron phosphate.

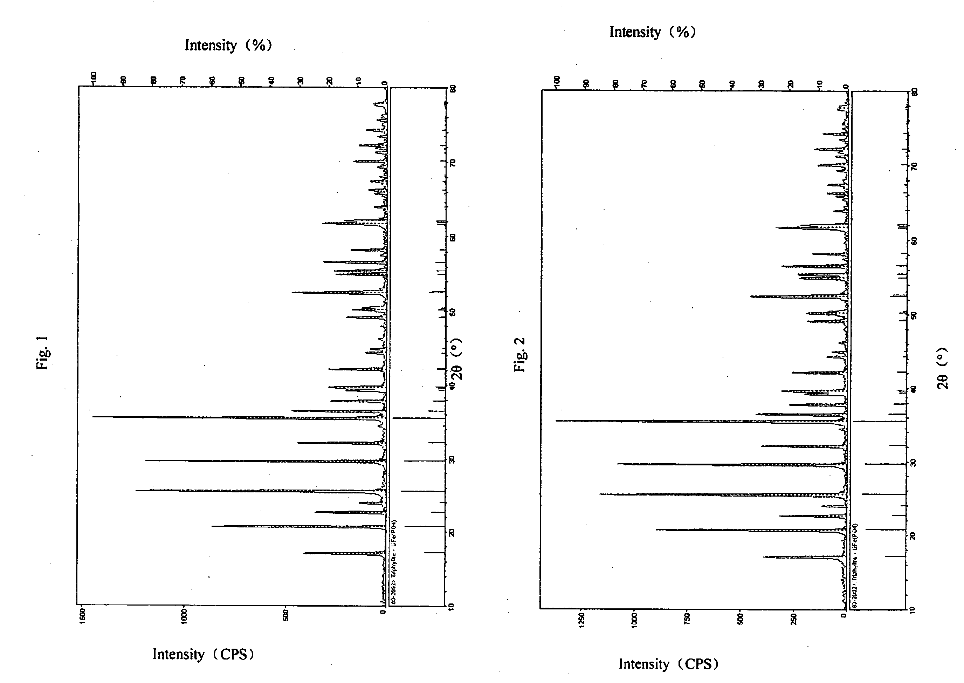

X-ray powder diffractometer (Rigaku Corporation, D/MAX-2200/PC) was adopted to give XRD pattern of the lithium iron phosphate as shown in Fig.1.

Example 2

This example describes the method for preparing lithium iron phosphate provided in the present invention.

(1) 239.5g of LiOH, 1158.6g of $FeCO_3$, 1319.7g of $NH_4H_2PO_4$, 320g of glucose" and 2700g of ethanol were mixed (the molar ratio of Li:Fe:P is 1:1:1), ball milled at 300 rpm for 10 hr, and then taken out and dried at 80°C.

(2) 300g of the mixture obtained in step (1) was fed into a stainless reactor (100L) provided with a gas inlet and a gas outlet, wherein the gas inlet and the gas outlet were arranged in the same vertical plane, the gas inlet was arranged at lower part, and the gas outlet was arranged at upper part. The gas inlet and gas outlet were opened, while argon gas was introduced at flow rate of 10 L/min to replace the air in the reactor. Thereafter, the gas inlet was closed, and the gas outlet was connected with a guide tube which was placed into 25 °C hydraulic oil (Caltex, special hydraulic oil 46#) at depth of 5cm below the oil level. Then the mixture was heated at rate of 5 °C/min to 700 °C , and sintered at that temperature for 20 hr. Finally, the gas inlet was opened, and argon gas was introduced at the rate of 15 L/min for cooling the product to room temperature to obtain lithium iron phosphate.

X-ray powder diffractometer (Rigaku Corporation, D/MAX-2200/PC) was adopted to give XRD pattern of the lithium iron phosphate as shown in Fig.2.

Example 3

This example describes the method for preparing lithium iron phosphate provided in the present invention.

(1) 369g of $Li_2CO_3$, 1799g of $FeC_2O_4 \cdot 2H_2O$, 1150g of $NH_4H_2PO_4$, 310g of dextrin and 3000g of ethanol were mixed (the molar ratio of Li:Fe:P is 1:1:1), ball milled at 300 rpm for 5 hr, and then taken out and dried at 80 °C .

(2) 300g of the mixture obtained in step (1) was fed into a stainless reactor (100L) provided with a gas inlet and a gas outlet, wherein the gas inlet and the gas outlet were arranged in the same vertical plane, the gas inlet was arranged at lower part, and the gas outlet was arranged at upper part. The gas inlet and gas outlet were opened, while argon gas was introduced at flow rate of 15 L/min to replace the air in the reactor. Thereafter, the gas inlet was closed, and the gas outlet was connected with a guide tube which was placed into 25 °C quenching oil (SKFZ-2 quenching oil, Suzhou Special Chemical Co. Ltd.) at depth of 8cm below the oil level. Then the mixture was heated at rate of 15°C/min to 750°C, and sintered at that temperature for 20 hr. Finally, the gas inlet was opened, and argon gas was introduced at the rate of 10 L/min for cooling the product to room temperature to obtain lithium iron phosphate.

Example 4

This example describes the method for preparing lithium iron phosphate provided in the present invention.

(1) 369g of $Li_2CO_3$, 1799g of $FeC_2O_4 \cdot 2H_2O$, 1319.7g of $(NH_4)_2HPO_4$, 310g of carbon black and 3000g of ethanol were mixed (the molar ratio of Li:Fe:P is 1:1:1), ball milled at 300 rpm for 10 hr, and then taken out and dried at 80 °C .
(2) 300g of the mixture obtained in step (1) was fed into a stainless reactor (100L) provided with a gas inlet and a gas outlet, wherein the gas inlet and the gas outlet were arranged in the same vertical plane, the gas inlet was arranged at lower part, and the gas outlet was arranged at upper part. The gas inlet and gas outlet were opened, while argon gas was introduced at flow rate of 5 L/min to replace the air in the reactor. Thereafter, the gas inlet was closed, and the gas outlet was connected with a guide tube which was placed into 25 °C high temperature lubricating oil (NS1001 high temperature lubrication grease, YAMAICHI) at depth of 5cm below the oil level. Then the mixture was heated at rate of 10°C/min to 700°C, and sintered at that temperature for 20 hr. Finally, the gas inlet was opened, and argon gas was introduced at the rate of 5 L/min for cooling the product to room temperature to obtain lithium iron phosphate.

Comparison Example 1

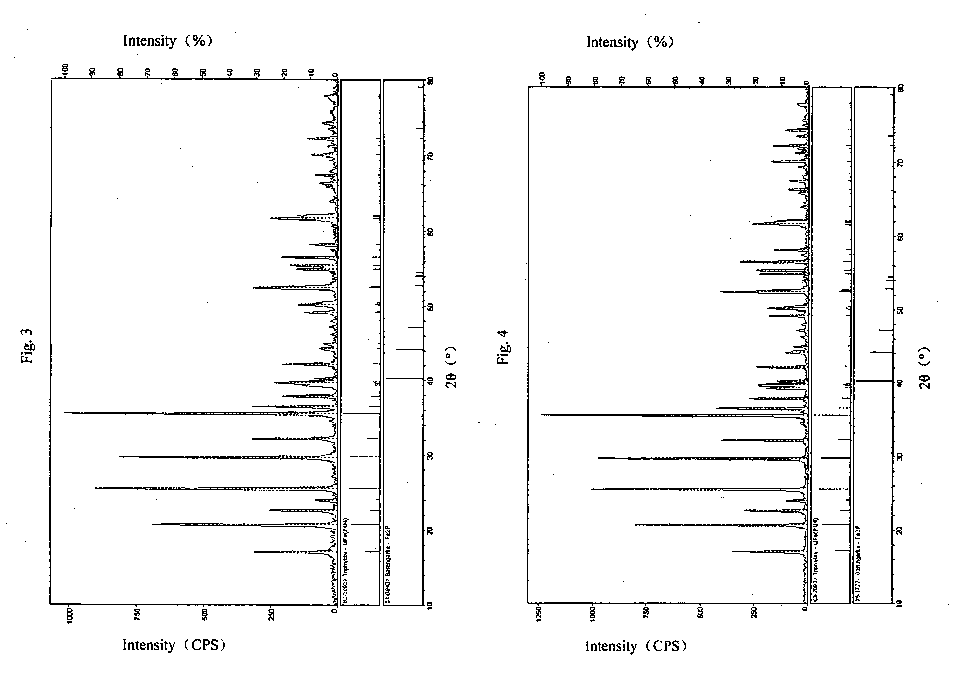

This comparison example describes the method for preparing lithium iron phosphate provided in prior arts.
Lithium iron phosphate was prepared according to the same method in the exampl 1, except that in the step (2), 300g of the mixture obtained in step (1) was fed into a stainless reactor (100L) provided with a gas inlet and a gas outlet, wherein the gas inlet and the gas outlet were arranged in the same vertical plane, the gas inlet was arranged at lower part, and the gas outlet was arranged at upper part; the gas inlet and the gas outlet were opened, and argon gas was introduced at flow rate of 5 L/min to replace the air in the reactor; argon gas was continuously introduced, and regulated to the flow rate of 2 L/min, while the mixture was heated at rate of 10°C/min to 750°C, and sintered at that temperature for 20 hr; and finally argon gas was continuously introduced for cooling to room temperature to obtain lithium iron phosphate.
X-ray powder diffractometer (Rigaku Corporation, D/MAX-2200/PC) was adopted to give XRD pattern of the lithium iron phosphate as shown in Fig.3.

Comparison Example 2

This comparison example describes the method for preparing lithium iron phosphate provided in prior arts.
Lithium iron phosphate was prepared according to the same method in the example 1, except that in the step (2) 300g of the mixture obtained in step (1) was fed into a stainless reactor (100L) provided with a gas inlet and a gas outlet, wherein the gas inlet and the gas outlet were arranged in the same vertical plane, the gas inlet was arranged at lower part, and the gas outlet was arranged at upper part; the gas inlet and the gas outlet were opened, and CO gas was introduced at flow rate of 5 L/min to replace the air in the reactor; after the gas inlet and gas outlet were closed, the mixture was heated at rate of 10°C/min to 750°C, and sintered at that temperature for 20 hr; and finally the product was cooled to room temperature to obtain lithium iron phosphate as anode active material for lithium ion secondary battery.
X-ray powder diffractometer (Rigaku Corporation, D/MAX-2200/PC) was adopted to give XRD pattern of the lithium iron phosphate as shown in Fig.4.

Example 5

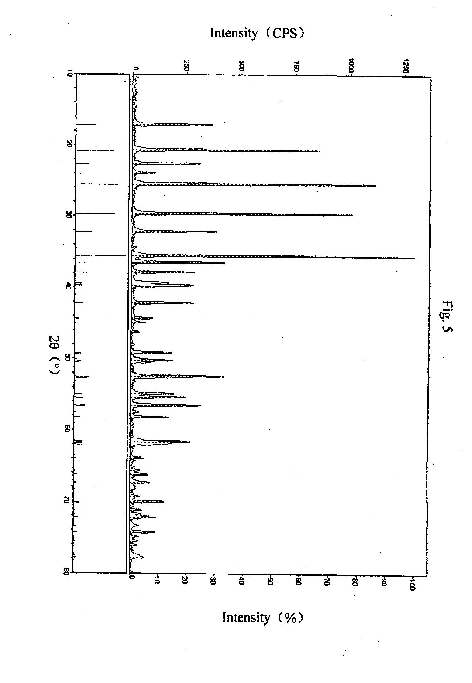

This example describes the method for preparing lithium iron phosphate provided in the present invention.
Lithium iron phosphate was prepared according to the same method in the example 1, except that in step (1), 1799g of $FeC_2O_4 \cdot 2H_2O$ was replaced by a mixture of 2.5 mol $FeC_2O_4$ and 7.5 mol $FeCO_3$ which was prepared as follows.
1799 g of $FeC_2O_4 \cdot 2H_2O$ was heated in 280°C vacuum oven (vacuum degree 500 Pa) for 3 hr to obtain the mixture of $FeC_2O_4$ and $FeCO_3$ which was then cooled at 5 °C/min to room temperature. The molar ratio of $FeC_2O_4$ to $FeCO_3$ in the mixture was calculated as 1:3.
X-ray powder diffractometer (Rigaku Corporation, D/MAX-2200/PC) was adopted to give XRD pattern of the lithium iron phosphate as shown in Fig.5.

Example 6

This example describes the method for preparing lithium iron phosphate provided in the present invention.
Lithium iron phosphate was prepared according to the same method in the example 1, except that, in step (1), 1799g of $FeC_2O_4·2H_2O$ was replaced by a mixture of 5 mol $FeC_2O_4$ and 5 mol $FeCO_3$ which was prepared by directly mixing the $FeC_2O_4$ and $FeCO_3$; and in the step (2), two-stage sintering method was used, i.e. the mixture obtained in the step (1) was sintered at 350 °C for 5 hr, and then sintered at 700 °C for 15 hr.

Examples 7-12

In the following examples, batteries were prepared from lithium iron phosphate as positive electrode active material provided in the present invention, and then were subjected to performance tests.

(1) Battery preparation

Positive electrode preparation:

90g of $LiFePO_4$ prepared by the examples 1-6 as positive electrode active material respectively, 5g of poly(vinylidene difluoride) (PVDF) as binder, and 5g of acetylene black as conductive agent were added into 50g of N-methylpyrrolidone, and stirred in a vacuum stirrer to form uniform positive electrode slurry. The positive electrode slurry was uniformly coated on both sides of 20 micron-thick aluminum foil, baked at 150°C, rolled, and cutted into 540mm×43.5mm positive electrode containing $LiFePO_4$ 5.2g as active component.

Negative electrode preparation:

90g natural graphite as negative electrode active component, 5g of PVDF as binder, and 5g of carbon black as conductive agent were added into 100g of N-methylpyrrolidone, and stirred in vacuum stirrer to form uniform negative electrode slurry. The slurry was uniformly coated on both side of 12 micron-thick copper foil, baked at 90°C, rolled, and cutted into 500mm×44mm negative electrode containing 3.8g of natural graphite as active component.

Battery assembly:

Aforementioned positive electrode, negative electrode, and polypropylene membrane were respectively wound into an electrode core for a square lithium ion battery, and the electrode core was then placed in a battery aluminum casing. $LiPF_6$ was dissolved at concentration of 1 mol/L in mixed solvent of EC/EMC/DEC (1: 1:1) to form a non aqueous electrolyte which was then injected at 3.8g/Ah into the battery aluminum casing, and then the casing was sealed to obtain lithium ion secondary batteries A1-A6, respectively.

(2) Battery mass specific capacity and cycle performance test

The test comprises respectively charging obtained lithium ion batteries A1-A6 at constant current of 0.2C with charging upper limit set at 4.2V, standing for 20min, discharging at constant current of 0.2C from 4.2V to 2.5V, recording the discharge capacity as initial discharge capacity during the discharge process, and calculating the battery mass specific capacity according to equation as below:

$$\text{Mass specific capacity} = \text{initial discharge capacity of the battery (mAh)}/ \text{ the weight of the active component in the positive electrode (g)}$$

The discharge capacity was recorded respectively after repeating the aforementioned charging-discharging steps for 30 and 50 times, and the capacity maintenance ratio after and before cycles was calculated as below:

$$\text{Capacity maintenance ratio} = (\text{discharge capacity after Nth cycle/initial discharge capacity}) \times 100\%$$

The results were shown in Table 1.

(3) Battery internal resistance test

The test comprises respectively placing lithium ion batteries A1-A6 on intelligent battery internal resistance tester (Guangzhou Kinte Co. Ltd., BS-VR3), applying 1KHz AC signal, and obtaining the internal resistance by measuring the battery AC voltage drop.

Comparison example 3-4

The comparison examples describe batteries prepared from lithium iron phosphate obtained by prior arts, and the battery performance tests.

Comparison batteries AC1-AC2 were prepared, and subjected to the battery initial discharge capacity and cycle performance tests to give mass specific capacity according to the same method in examples 7-12, except that the positive electrode active material for preparing the battery was lithium iron phosphate obtained from the comparison examples 1-2.

The results were shown in Table 1.

Table 1

| Example No. | Battery No. | Mass specific capacity (mAh/g) | Capacity maintenance ratio after 30 cycles | Capacity maintenance ratio after 50 cycles | Internal resistance (mΩ) |
|---|---|---|---|---|---|
| Example 7 | A1 | 151.63 | 99.02% | 98.25% | 19.78 |
| Example 8 | A2 | 149.39 | 98.21% | 97.93% | 21.57 |
| Example 9 | A3 | 149.16 | 98.00% | 97.01% | 22.42 |
| Example 10 | A4 | 147.25 | 98.25% | 97.33% | 24.91 |
| Example 11 | A5 | 154.23 | 99.16% | 98.35% | 19.04 |
| Example 12 | A6 | 154.12 | 99.11% | 98.31% | 19.17 |
| Comparison Example 3 | AC1 | 113.26 | 93.28% | 90.85% | 230.48 |
| Comparison Example 4 | AC2 | 108.73 | 92.21% | 88.83% | 276.54 |

It can be observed from results in Table 1, the batteries A1-A6 prepared from lithium iron phosphate according to the present invention have significantly higher initial discharge mass specific capacity than that of the comparison batteries AC1-AC2 in the comparison examples, and significantly lower battery internal resistance than that of the comparison batteries; and the batteries A1-A6 have capacity maintenance ratios respectively above 98% and 97% after 30 cycles and 50 cycles, while the comparison batteries have the capacity maintenance ratios respectively only 92.21-93.28% and 88.83-90.85% after 30 cycles and 50 cycles. Therefore, the battery prepared from lithium iron phosphate according to the method in the present invention has high capacity, low internal resistance, and good cycle performance.

Figures 1, 2, and 5 show XRD diffraction patterns of lithium iron phosphate prepared in the examples 1, 2, and 5, respectively. It can be observed from the figures that those lithium iron phosphates have standard olivine type structure and good crystal form, and are free of impurity phase.

Figures 3 and 4 show XRD diffraction patterns of lithium iron phosphate prepared by the conventional method in the comparison examples 1 and 2, respectively. Compared with PDF standard card (85-1727) of $Fe_2P$, a highest peak at $2\theta$ of 40°-41°, and a second highest peak at $2\theta$ of 44°-45° appear in the XRD diffraction patterns shown in Figures 3 and 4, and those two peaks are characteristic peaks of $Fe_2P$, indicating that $Fe_2P$ impurity phase is incorporated in those lithium iron phosphates.

**Claims**

1. A method for preparing lithium iron phosphate as positive electrode active material for lithium ion secondary battery, comprising sintering a mixture containing a lithium source, an bivalent iron source, a phosphorus source, and a carbon source in an inert atmosphere, and cooling the sintered product; wherein during the sintering process, the inert atmosphere is static, and has a normal pressure, wherein said sintering is carried out in a reactor provided with a gas inlet, a gas outlet and a pipe, the gas of the inert atmosphere is introduced into the reactor through the gas inlet before sintering to replace the air in the reactor, the gas inlet is kept closed during sintering, and one end of the pipe is hermetically connected with the gas outlet and the other end is disposed in a hydraulic liquid.

2. The method according to claim 1, wherein the hydraulic liquid is a liquid which has a boiling point no lower than 140°C and is unreactive with the gases generated during the sintering process.

3. The method according to claim 1, wherein the sintering is one-stage constant-temperature sintering comprising the steps of heating at rate of 5-20°C/min to a constant temperature of 500-750°C and then sintering at this constant temperature for 2-20 hr.

4. The method according to claim 1, wherein the sintering comprises subjecting the mixture to a first sintering at a first sintering temperature of 300-450°C for 4-15 hr, and a second sintering at a second sintering temperature of 600-800°C for 10-25 hr.

5. The method according to claim 1, wherein the lithium source, bivalent iron source, and phosphorus source have Li: Fe: P molar ratio of 0.9-1.2: 1: 1, and the amount of the carbon source is 0.5-20 wt% relative to the total weight of the lithium source, bivalent iron source, and phosphorus source.

6. The method according to claim 1, wherein the lithium source is one or more selected from $Li_2CO_3$, $LiOH$, $Li_2C_2O_4$ and $CH_3COOLi$; the bivalent iron source is one or more selected from $FeC_2O_4$, $Fe(CH_3COO)_2$ and $FeCO_3$; the phosphorus source is one or more selected from $NH_4H_2PO_4$, $(NH_4)_2HPO_4$, $(NH_4)_3PO_4$, $LiH_2PO_4$, $Li_2HPO_4$ and $Li_3PO_4$; and the carbon source is one or more selected from terpolymer of benzene, naphthalene and phenanthrene, binary copolymer of benzene and phenanthrene, binary copolymer of benzene and anthracene, polyvinyl alcohol, sucrose, glucose, citric acid, starch, dextrin, phenolic resin, furfural resin, artificial graphite, natural graphite, acetylene black, carbon black, and mesocarbon microbeads.

7. The method according to claim 1 or 6, wherein the bivalent iron source is a mixture of $FeC_2O_4$ and $FeCO_3$, and the molar ratio of $FeC_2O_4$ to $FeCO_3$ is 1:0.5-4.

8. The method according to claim 7, wherein the mixture of $FeC_2O_4$ and $FeCO_3$ is prepared by one of the following two methods: Method 1: mixing $FeC_2O_4$ and $FeCO_3$; Method 2: heating ferrous oxalate under vacuum at a temperature of 100-350°C for 0.2-6 hr.

9. The method according to claim 1, wherein the gas of the inert atmosphere is one or more of nitrogen, carbon monoxide, carbon dioxide, ammonia gas, and Group 0 gases.

**Patentansprüche**

1. Verfahren zur Herstellung von Lithium-Eisenphosphat als Aktivmaterial einer positiven Elektrode für eine Lithium-Ionen-Sekundärbatterie, umfassend das Sintern einer Mischung, die eine Lithiumquelle, eine Quelle für zweiwertiges Eisen, eine Phosphorquelle und eine Kohlenstoffquelle enthält, in einer inerten Atmosphäre, und das Kühlen des gesinterten Produkts; worin während des Sintervorgangs die inerte Atmosphäre statisch ist und Normaldruck hat, worin das Sintern in einem Reaktor durchgeführt wird, der mit einem Gaseinlass, einem Gasauslass und einer Röhre versehen ist, wobei das Gas der inerten Atmosphäre in den Reaktor durch den Gaseinlass vor dem Sintern eingeführt wird, um die Luft im Rektor zu ersetzen, der Gaseinlass während des Sinterns geschlossen gehalten wird, und ein Ende der Röhre hermetisch mit dem Gasauslass verbunden ist und das andere Ende in eine hydraulische Flüssigkeit eingebracht ist.

2. Verfahren gemäß Anspruch 1, worin die hydraulische Flüssigkeit eine Flüssigkeit ist, die einen Siedepunkt von nicht weniger als 140°C aufweist und mit den während des Sintervorgangs erzeugten Gasen unreaktiv ist.

3. Verfahren gemäß Anspruch 1, worin das Sintern ein einstufiges Sintern mit konstanter Temperatur ist, das die Schritte des Erwärmens mit einer Rate von 5 bis 20°C/min auf eine konstante Temperatur von 500 bis 750°C und dann das Sintern bei dieser konstanten Temperatur für 2 bis 20 Stunden umfasst.

**4.** Verfahren gemäß Anspruch 1, worin das Sintern das Durchführen eines ersten Sintervorgangs bei einer ersten Sintertemperatur von 300 bis 450°C über 4 bis 15 Stunden und eines zweiten Sintervorgangs bei einer zweiten Sintertemperatur von 600 bis 800°C über 10 bis 25 Stunden mit der Mischung umfasst.

**5.** Verfahren gemäß Anspruch 1, worin die Lithiumquelle, die Quelle für zweiwertiges Eisen und die Phosphorquelle ein Li:Fe:P-Molverhältnis von 0,9 bis 1,2:1:1 haben, und die Menge der Kohlenstoffquelle 0,5 bis 20 Gew.% relativ zum Gesamtgewicht der Lithiumquelle, der Quelle für zweiwertiges Eisen und der Phosphorquelle ist.

**6.** Verfahren gemäß Anspruch 1, worin die Lithiumquelle eines oder mehrere ausgewählt aus $Li_2CO_3$, LiOH, $Li_2C_2O_4$ und $CH_3COOLi$ ist; die Quelle für zweiwertiges Eisen eines oder mehrere ausgewählt aus $FeC_2O_4$, $Fe(CH_3COO)_2$ und $FeCO_3$ ist; die Phosphorquelle eines oder mehrere ausgewählt aus $NH_4H_2PO_4$, $(NH_4)_2HPO_4$, $(NH_4)_3PO_4$, $LiH_2PO_4$, $Li_2HPO_4$ und $Li_3PO_4$ ist; und die Kohlenstoffquelle eines oder mehrere ausgewählt aus einem Terpolymer aus Benzol, Naphthalin und Phenanthren, einem binären Copolymer aus Benzol und Phenanthren, einem binären Copolymer aus Benzol und Anthracen, Polyvinylalkohol, Saccharose, Glukose, Zitronensäure, Stärke, Dextrin, Phenolharz, Furfuralharz, künstlicher Graphit, natürlicher Graphit, Acetylenruß, Ruß, und Mesokohlenstoff-Mikroperlen ist.

**7.** Verfahren gemäß Anspruch 1 oder 6, worin die Quelle für zweiwertiges Eisen eine Mischung aus $FeC_2O_4$ und $FeCO_3$ ist, und das Molverhältnis von $FeC_2O_4$ zu $FeCO_3$ 1:0,5 bis 4 ist.

**8.** Verfahren gemäß Anspruch 7, worin die Mischung aus $FeC_2O_4$ und $FeCO_3$ durch eines aus den folgenden beiden Verfahren hergestellt wird: Verfahren 1: Mischen von $FeC_2O_4$ und $FeCO_3$; Verfahren 2: Erwärmen von Eisenoxalat unter Vakuum bei einer Temperatur von 100 bis 350°C über 0,2 bis 6 Stunden.

**9.** Verfahren gemäß Anspruch 1, worin das Gas der inerten Atmosphäre eines oder mehrere aus Stickstoff, Kohlenmonoxid, Kohlendioxid, Ammoniakgas und Gasen der Gruppe 0 ist.

**Revendications**

**1.** Procédé pour préparer du phosphate de fer-lithium en tant que matériau actif d'électrode positive pour une batterie lithium-ion rechargeable, comprenant le frittage d'un mélange contenant une source de lithium, une source de fer divalent, une source de phosphore et une source de carbone dans une atmosphère inerte, et le refroidissement du produit fritté ; dans lequel, durant le traitement de frittage, l'atmosphère inerte est statique et a une pression normale, et dans lequel ledit frittage est effectué dans un réacteur doté d'une entrée de gaz, d'une sortie de gaz et d'un tuyau, le gaz de l'atmosphère inerte est introduit dans le réacteur par l'entrée de gaz avant le frittage pour remplacer l'air dans le réacteur, l'entrée de gaz est maintenue fermée durant le frittage, et une extrémité du tuyau est hermétiquement connectée à la sortie de gaz et l'autre extrémité est disposée dans un liquide hydraulique.

**2.** Procédé selon la revendication 1, dans lequel le liquide hydraulique est un liquide qui a un point d'ébullition d'au moins 140°C et qui ne réagit pas avec les gaz générés durant le traitement de frittage.

**3.** Procédé selon la revendication 1, dans lequel le frittage est un frittage en une phase à température constante comprenant les étapes consistant à chauffer à une vitesse de 5 à 20°C/min jusqu'à une température constante de 500 à 750°C et ensuite à fritter à cette température constante pendant 2 à 20 heures.

**4.** Procédé selon la revendication 1, dans lequel le frittage comprend l'opération consistant à soumettre le mélange à un premier frittage à une première température de frittage de 300 à 450°C pendant 4 à 15 heures et à un deuxième frittage à une deuxième température de frittage de 600 à 800°C pendant 10 à 25 heures.

**5.** Procédé selon la revendication 1, dans lequel la source de lithium, la source de fer divalent, et la source de phosphore ont un rapport molaire Li/Fe/P de 0,9 à 1,2/1/1, et la quantité de la source de carbone est de 0,5 à 20 % en poids par rapport au poids total de la source de lithium, de la source de fer divalent, et de la source de phosphore.

**6.** Procédé selon la revendication 1, dans lequel la source de lithium est une ou plusieurs sources choisies parmi $Li_2CO_3$, LiOH, $Li_2C_2O_4$ et $CH_3COOLi$ ; la source de fer divalent est une ou plusieurs sources choisies parmi $FeC_2O_4$, $Fe(CH_3COO)_2$ et $FeCO_3$ ; la source de phosphore est une ou plusieurs sources choisies parmi $NH_4H_2PO_4$, $(NH_4)_2HPO_4$, $(NH_4)_3PO_4$, $LiH_2PO_4$, $Li_2HPO_4$ et $Li_3PO_4$ ; et la source de carbone est une ou plusieurs sources choisies parmi un terpolymère de benzène, naphtalène et phénanthrène, un copolymère binaire de benzène et phénanthrène, un copolymère binaire de benzène et anthracène, le poly(alcool vinylique), le saccharose, le glucose, l'acide citrique, l'amidon, la dextrine, une résine phénolique, une résine de furfural, le graphite artificiel, le graphite naturel, le noir d'acétylène, le noir de carbone, et les microperles de mésocarbone.

7. Procédé selon la revendication 1 ou 6, dans lequel la source de fer divalent est un mélange de $FeC_2O_4$ et $FeCO_3$, et le rapport molaire du $FeC_2O_4$ au $FeCO_3$ est de 1/0,5-4.

8. Procédé selon la revendication 7, dans lequel le mélange de $FeC_2O_4$ et $FeCO_3$ est préparé par l'un des deux procédés suivants : procédé 1, mélange de $FeC_2O_4$ et $FeCO_3$ ; procédé 2, chauffage d'oxalate ferreux sous vide à une température de 100 à 350°C pendant 0,2 à 6 heures.

9. Procédé selon la revendication 1, dans lequel le gaz de l'atmosphère inerte est un ou plusieurs gaz parmi l'azote, le monoxyde de carbone, le dioxyde de carbone, l'ammoniac, et les gaz du Groupe 0.

Fig. 1

Fig. 2

Fig. 3

Fig. 4

Fig. 5

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 1785799 A
- CN 1948133 A

- DE 102005012640 A1